# EUROPEAN PATENT APPLICATION

(11) **EP 4 750 065 A1**
(43) Date of publication of application: **27.05.2026**
(21) Application number: 24842402.0
(22) Date of filing: 17.07.2024
(51) Int. Cl.: H04N 21/2187

(54) **LIVE BROADCAST ROOM INFORMATION DISPLAY METHOD, DEVICE AND STORAGE MEDIUM**

(30) Priority: 17.07.2023 CN 202310876954
(71) Applicant: Beijing Zitiao Network Technology Co., Ltd., Beijing 100190 (CN)
(72) Inventor: ZHANG, Tiantian, Beijing 100028 (CN); GUAN, Tiantian, Beijing 100028 (CN)
(74) Representative: Isarpatent
(86) International application number: PCT/CN2024/106055
(87) International publication number: WO 2025/016414

(57) **Abstract**

Embodiments of the present disclosure provide a method, a device and a storage medium for displaying informationin a live streaming room. A control panel of target information is displayed through an administrator client in response to a trigger operation instruction for any target information in the live broadcast room, wherein the control panel comprises an information pin control (S201); and a target position of a live streaming room interface is controlled to display a first display control in response to a trigger operation instruction for the information pin control, the target information (S202) being displayed in the first display control. By controlling pining of the target information in the live streaming room by the administrator client, all users in the live streaming room may see the target information in the live streaming room interface, which improves a display effect of the target information, avoids repeated inputs from an administrator, and improves efficiency of managing the live streaming room by the administrator.

## Description

This application claims the benefit of Chinese Patent Application No. 202310876954.8, filed on July 17, 2023, entitled "METHOD, DEVICE AND STORAGE MEDIUM FOR DISPLAYING INFORMATION IN LIVE STREAMING ROOM" which is hereby incorporated herein by reference in its entirety.

### FIELD

Embodiments of the present disclosure relate to the technical field of computer and network communication, in particular to a method, a device and a storage medium for displaying information in a live streaming room.

### BACKGROUND

In a live streaming scenario, a streamer may set one or more users as administrator in a live streaming room, and the administrator helps the streamer to manage the live streaming room.

When the administrator interacts with a live streaming room audience, there is usually a situation in which an input needs to be repeated, resulting in a decrease of efficiency of the administrator in managing the live streaming room.

### SUMMARY

Embodiments of the present disclosure provide a method, device and storage medium for displaying information in a live streaming room, to implement pin control on target information in the live streaming room by an administrator client, and improve the efficiency of the administrator in managing the live streaming room.

According to a first aspect, embodiments of the present disclosure provide a method for displaying information in a live streaming room, applied to an administrator client, and the method includes: displaying a control panel of target information in response to a trigger operation instruction for any target information in the live streaming room, where the control panel includes an information pin control; controlling a target position of a live streaming room interface to display a first display control in response to a trigger operation instruction for the information pin control, the target information being displayed in the first display control.

According to a second aspect, embodiments of the present disclosure provide a method for a displaying information in live streaming room, applied to a streamer client, and the method includes: receiving a pin instruction for target information, the pin instruction being a pin instruction corresponding to an administrator client; displaying a first display control at a target position in a live streaming room interface according to the pin instruction for the target information, the target information being displayed in the first display control.

According to a third aspect, embodiments of the present disclosure provide a device for displaying information a live streaming room, including: a control module, configured to display a control panel of target information in response to a trigger operation instruction for any target information in the live streaming room, wherein the control panel includes an information pin control; a pin module, configured to, control a target position of a live streaming room interface to display a first display control in response to a trigger operation instruction for the information pin control, the target information being displayed in the first display control.

According to a fourth aspect, embodiments of the present disclosure provide a device for displaying information in a live streaming room, including: a receiving module, configured to receive a pin instruction for target information, the pin instruction being a pin instruction corresponding to an administrator client; a control module, configured to display a first display control at a target position in a live streaming room interface according to the pin instruction for the target information, the target information being displayed in the first display control.

According to a fifth aspect, embodiments of the present disclosure provide an electronic device, including: at least one processor and a memory; the memory storing computer executable instructions; the at least one processor executing the computer executable instruction stored in the memory, causing the at least one processor to perform the method for displaying information in a live streaming room according to the first aspect and possible designs of the first aspect, or the method for displaying information in the live streaming room according to the second aspect and possible designs of the second aspect.

According to a sixth aspect, embodiments of the present disclosure provide a computer readable storage medium, the computer readable storage medium storing computer executable instructions, when executed by the processor, cause the processor to perform the method for displaying information in the live streaming room according to the first aspect and the possible designs of the first aspect, or the method for displaying information in a live streaming room according to the second aspect and the possible designs of the second aspect.

According to a seventh aspect, embodiments of the present disclosure provide a computer program product, including computer executable instructions, when executed by the processor, cause the processor to perform the method for displaying information in a live streaming room according to the first aspect and the possible designs of the first aspect, or the method for displaying information in a live streaming room according to the second aspect and the possible designs of the second aspect.

### BRIEF DESCRIPTION OF DRAWINGS

In order to more clearly illustrate technical solutions of embodiments of the present disclosure, drawings used in the description of the embodiments will be briefly introduced below, it is obvious that the drawings in the following description are some embodiments of the present disclosure, and for those skilled in the art, other drawings may be obtained according to these drawings without creative labor.
FIG. 1 is a schematic diagram of a scenario of a method for displaying information in a live streaming room provided by an embodiment of the present disclosure;
FIG. 2 is a schematic flowchart of a method for displaying information in a live streaming room provided by an embodiment of the present disclosure;
FIG. 3 is a schematic diagram of interface interaction of a method for displaying information in a live streaming room provided by an embodiment of the present disclosure;
FIG. 4 is a schematic diagram of an interface of a method for displaying information in a live streaming room provided by an embodiment of the present disclosure;
FIG. 5 is a schematic diagram of interface interaction of a method for displaying information in a live streaming room provided by another embodiment of the present disclosure;
FIG. 6a is a schematic diagram of interface interaction of a method for displaying information in a live streaming room provided by another embodiment of the present disclosure;
FIG. 6b is a schematic diagram of an interface of a method for displaying information in a live streaming room provided by another embodiment of the present disclosure;
FIG. 7a is a schematic diagram of interface interaction of a method for displaying information in a live streaming room provided by another embodiment of the present disclosure;
FIG. 7b is a schematic diagram of an interface of a method for displaying information in a live streaming room provided by another embodiment of the present disclosure;
FIG. 8a is a schematic interface interaction diagram of a method for displaying information in a live streaming room provided by another embodiment of the present disclosure;
FIG. 8b is a schematic diagram of an interface of a method for displaying information in a live streaming room provided by another embodiment of the present disclosure;
FIG. 9 is a schematic diagram of an interface of a method for displaying information in a live streaming room provided by another embodiment of the present disclosure;
FIG. 10 is a schematic diagram of interface interaction of a method for displaying information in a live streaming room provided by another embodiment of the present disclosure;
FIG. 11 is a schematic flowchart of a method for displaying information in a live streaming room provided by another embodiment of the present disclosure;
FIG. 12 is a structural block diagram of a device for displaying information in a live streaming room provided by an embodiment of the present disclosure;
FIG. 13 is a structural block diagram of a device for displaying information in a live streaming room provided by another embodiment of the present disclosure;
FIG. 14 is a schematic diagram of a hardware structure of an electronic device provided by an embodiment of the present disclosure.

### DETAILED DESCRIPTION

In order to make objectives, technical solutions and advantages of embodiments of the present disclosure clearer, technical solutions in embodiments of the present disclosure will be clearly and completely described below with reference to drawings in embodiments of the present disclosure. All other embodiments obtained by those of ordinary skill in the art without creative efforts shall fall within the scope of the present disclosure.

In a live streaming scenario, a streamer may set one or more users as an administrator in a live streaming room, and an administrator helps the streamer to manage the live streaming room.

When the administrator interacts with a live streaming room audience, there is usually a situation in which an input needs to be repeated, resulting in a decrease of efficiency of the administrator in managing the live streaming room. Furthermore, the display effect of the information is weak, and when there are more audiences speaking in the live streaming room, the information is difficult to be noticed by the audience.

In order to solve above technical problem, the present disclosure provides a method for displaying information in a live streaming room, and the live streaming room administrator can pin any target information in the live streaming room, causing the target information pinned for display in the live streaming room interface, so that all users in the live streaming room may see the target information in the live streaming room interface. The display effect of the target information is enhanced, repeated input by the administrator is avoided, and efficiency of the administrator in managing the live streaming room is improved.

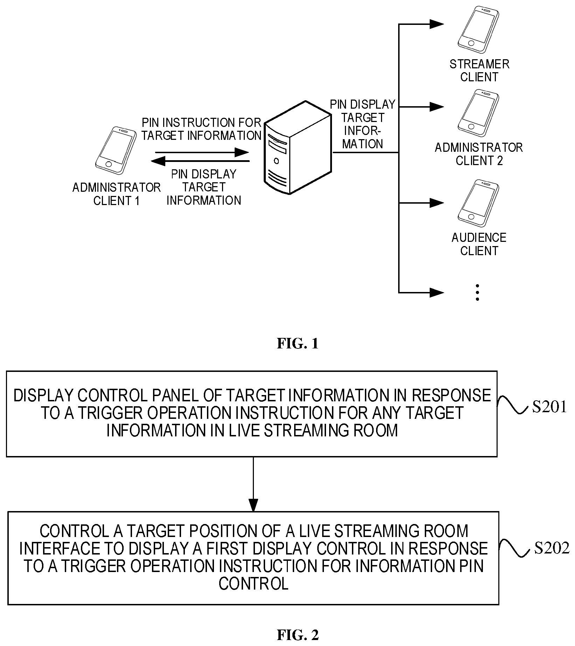

As shown in FIG. 1, an application scenario of a method for displaying information in a live streaming room provided by an embodiment of the present disclosure includes an administrator client, an audience client, a streamer client, and a server, the administrator client 1 sends a pin instruction for the target information to the server, and the server controls the live streaming room interface of all clients in the live streaming room to display the target information.

It should be noted that, both the user information and the data involved in this application are authorized by the user or by all parties, and the collection, use and processing of related data needs to comply with relevant laws and regulations and standards of related countries and regions, and a corresponding operation portal is provided for the user to select whether to authorize or decline.

The method for displaying information in the live streaming room of the present disclosure will be described in detail below with reference to specific embodiments.

Referring to FIG. 2, FIG. 2 is a schematic flowchart of an method for displaying information in a live streaming room provided by an embodiment of the present disclosure. The method of this embodiment may be applied to an administrator client in the live streaming room, and the method for displaying information in the live streaming room includes:
S201: displaying a control panel of the target information in response to a trigger operation instruction for any target information in the live streaming room, where the control panel includes an information pin control.

In this embodiment, the streamer may grant information pin permission to any one or more administrators in the live streaming room, or each administrator has information pin permission, and then the administrator may pin any target information for display in the live streaming room through the administrator client, causing the target information to be pinned for display in the live streaming room of all clients (including the streamer, the administrator, and the audience).

Optionally, the target information may be any type of comment, for example, a comment of text, picture, voice, or video; the target information may also be a mini program shared by any object in the live streaming room or a mini program selected by the administrator; the target information may also be question and answer information (including question content and reply content); the target information may also be activity information of any activity, for example, activity promotion information or an activity link; and the target information may also be any notification information.

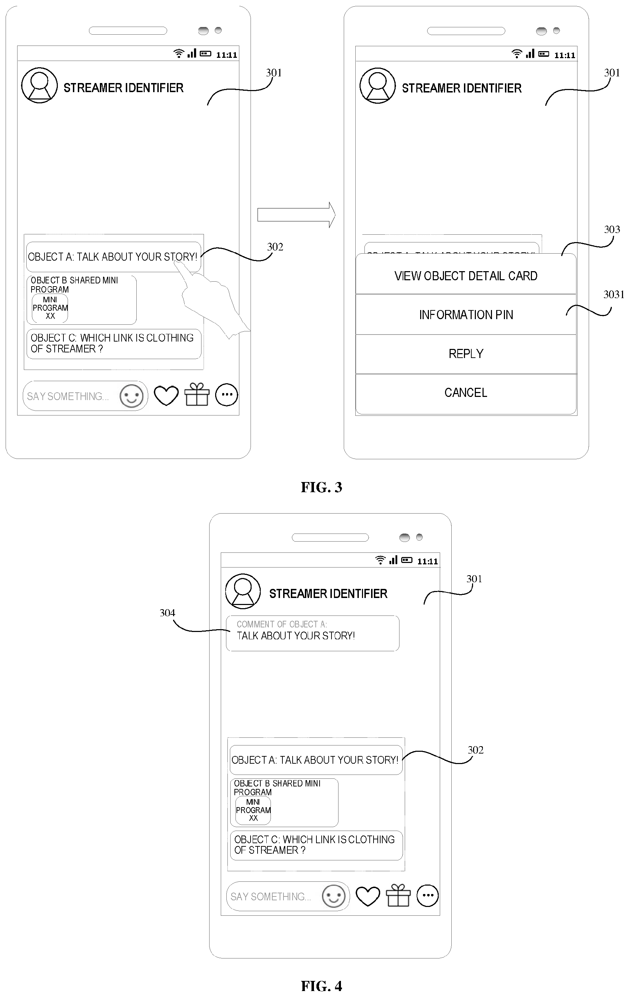

For any target information that needs to be pinned for display in the live streaming room, the administrator with information pin permission may perform a trigger operation on the target information through an administrator client, and the trigger operation includes but is not limited to a click operation, a long-press operation, etc. The administrator client displays a control panel of the target information in response to a trigger operation instruction for the target information, and the control panel includes an information pin control, for example, as shown in FIG. 3. For the target information 302 in the live streaming room interface 301 of the administrator client, after the administrator clicks the target information 302, the control panel 303 of the target information may be displayed, where the control panel 303 includes an information pin control 3031.

In step S202, controlling a target position of a live streaming room interface to display a first display control in response to a trigger operation instruction for the information pin control, the target information being displayed in the first display control.

In this embodiment, the administrator may trigger an information pin control, for example, a click information pin control, to trigger a pinning of the target information in the live streaming room interface, and may display a first display control at a target position in the live streaming room interface. The first display control displays the target information, and the target position may be any location in the live streaming room interface, may be some relatively significant locations. For example, the target position may be above a comment area, as shown in FIG. 4, and the first display control 304 is displayed above the comment area, so that all users in the live streaming room may see the target information. The display effect of the target information is enhanced, the repeated input by the administrator is avoided, and the efficiency of the administrator in managing the live streaming room is improved.

The displaying of the first display control at the target position of the live streaming room interface includes: displaying the first display control at the target position of the live streaming room interface on the administrator client, and displaying the first display control at the target position of the live streaming room interface of the other client in the live streaming room. Optionally, the administrator client may send a pin instruction for the target information to the server, causing the server to control the target position of the live streaming room interface of all clients in the live streaming room to display the first display control, and the target information is displayed in the first display control.

Optionally, when the information pin control is triggered for the first time, a display information pin function description may be displayed, for example, displayed in the form of a pop-up window, in which the text content of the function description may be displayed in the pop-up window to introduce the information pin function to the administrator. In addition, a control for confirming the pin may also be displayed in the pop-up window. When the control for confirming the pin is triggered, the target information may continue to be pinned for display. In addition, the pop-up window may further include a closing control, and the pop-up window may be closed when the closing control is triggered or any blank area is clicked.

According to the method for displaying information in the live streaming room provided in this embodiment, the administrator client displays the control panel of the target information in response to the trigger operation instruction for any target information in the live streaming room, and the control panel includes an information pin control. In response to the trigger operation instruction for the information pin control, the first display control is displayed at the target position of the live streaming room interface, and the target information is displayed in the first display control. The administrator client controls the pinning of the target information in the live streaming room, so that all users in the live streaming room may see the target information in the live streaming room interface. The display effect of the target information is enhanced, the repeated input by the administrator is avoided, and the efficiency of the administrator in managing the live streaming room is improved.

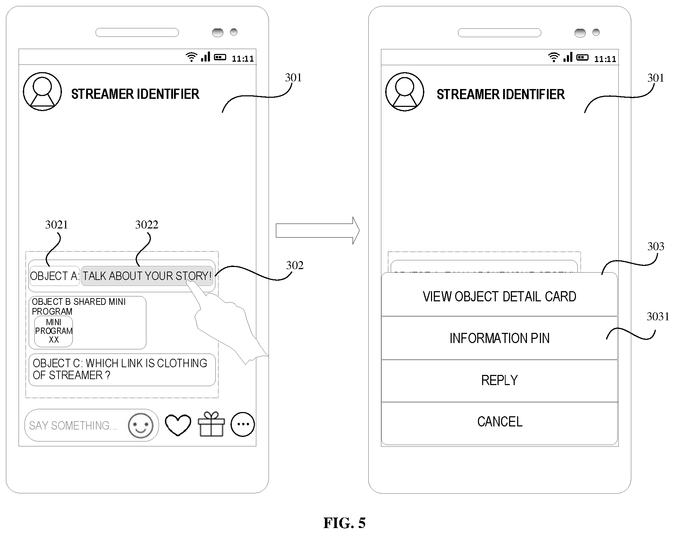

In some embodiments, if the target information is a comment of any object, as shown in FIG. 5, any comment (for example, the target information 302) is divided into the object identifier area 3021 (the object identifier display area of the object posting the comment) and the comment content area 3022 (the comment content display area) on the administrator client. Both the object identifier area 3021 and the comment content area 3022 are interactive, and the object identifier area 3021 may display the object identifier. When the object identifier area 3021 is triggered, that is, when the object identifier area is clicked, the object details card may be displayed. The content display area 3022 may be configured to display the comment content. When the content display area 3022 is triggered, the control panel 303 corresponding to the comment may be displayed on the right side of FIG. 5, and the control panel 303 includes the information pin control 3031. Optionally, if the comment is a comment of video or voice type, the control panel corresponding to the comment may further include a play control, a sharing control, and the like. Optionally, when the object identification area or the comment content area is triggered, there may be corresponding trigger feedback, for example, changing colors. Correspondingly, after the comment is pinned, the object identifier and the comment content may be displayed in the first display control, for example, as shown in FIG. 4.

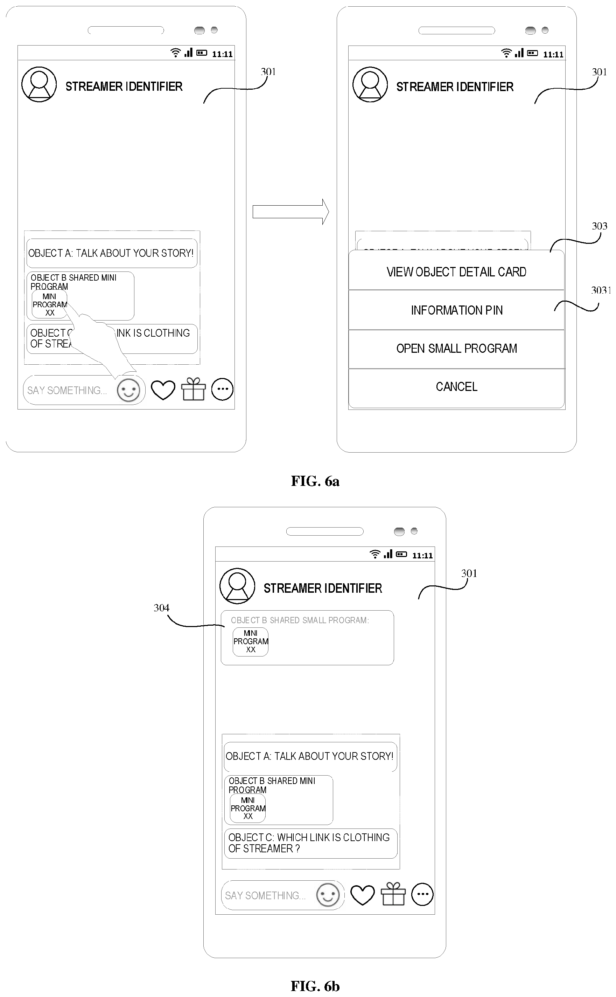

In some embodiments, if the target information is a mini program shared by any object in the live streaming room, the shared information may also include an object identification area and the mini program. When the object identification area is triggered, the object detail card may be displayed; and when the mini program is triggered, as shown in FIG. 6a, the control panel 303 may be displayed. The control panel 303 includes the information pin control 3031, or may include a view object detail card control and an open mini program control, and the user of the mini program control opens the mini program. Correspondingly, after the mini program is pinned, as shown in FIG. 6b, the username of the shared mini program and the mini program may be displayed in the first display control 304.

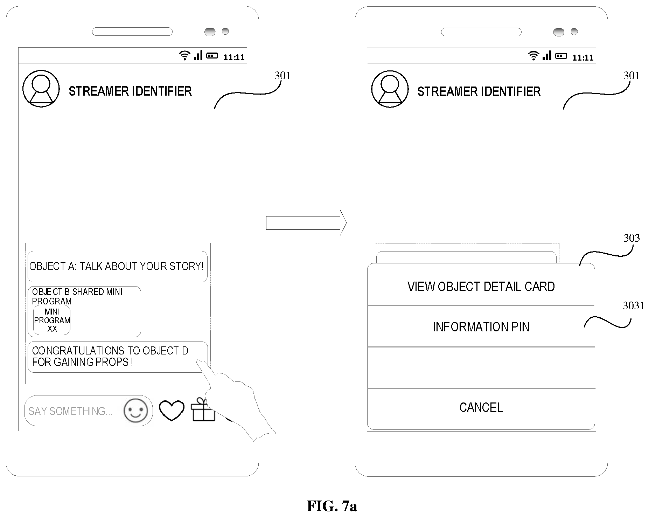

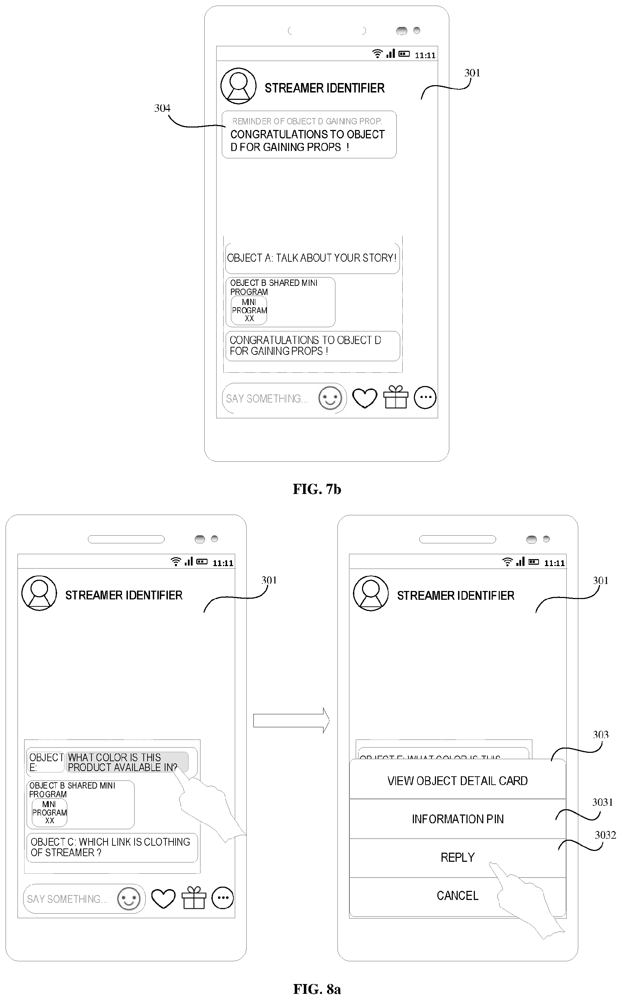

In some embodiments, if the target information is any notification information, for example, notification information of the object receiving the prop in FIG. 7a, the control panel 303 may be displayed when the notification information is triggered, and the control panel 303 includes the information pin control 3031, or may include a view object details card control. Correspondingly, after the notification information is pinned, as shown in FIG. 7b, the notification information may be displayed in the first display control.

In some embodiments, if the target information is any active activity information, such as activity promotion information or an activity link, when the activity information is triggered, the control panel may be displayed. The control panel includes an information pin control, or open activity link control, and the open activity link control is configured to open the activity page. Correspondingly, after the activity information is pinned, the activity information may be displayed in the first display control, similar to FIG. 7b.

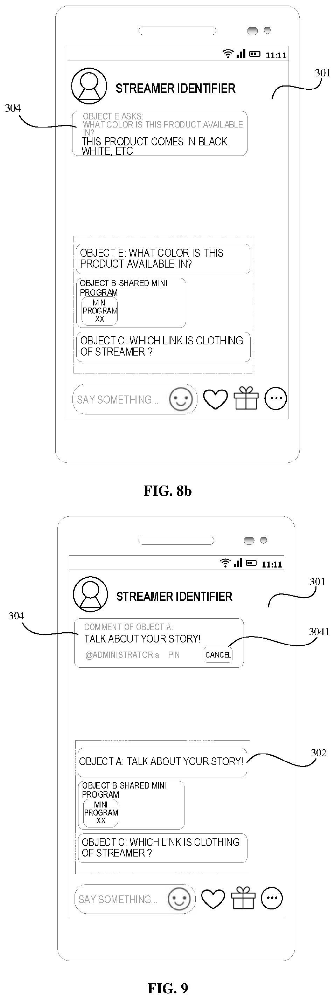

In some embodiments, if the target information is question and answer information, the question and answer information includes a comment of any object and the reply content of the administrator. The comment of any object may be the question content of the object, for example, for any comment in the comment area, here denoted as a first comment, as shown in FIG. 8a, the administrator client may display a control panel 303 corresponding to the first comment in response to a trigger operation instruction for the first comment, and the control panel 303 includes a reply control 3032 and an information pin control 3031. When the reply control 3032 is triggered, an input box may be displayed, and the administrator may input the reply content in the input box. Then, the reply content may be associated with the first comment to obtain a set of association information. Further, in response to a trigger operation instruction for the information pin control 3031, a pin instruction for the association information may be sent to the server, to implement the pinning of the association information for display, as shown in FIG. 8b. Optionally, the reply control and the information pin control may also be integrated into one control, for example, a reply and pin control, and when the reply and pin control is triggered, the input box may be displayed, a reply content input in the input box is received, and the association and information pin are performed.

If the reply content is associated with the first comment to obtain a set of information, it is considered that there may be other objects that have the same comment, for example, the same question is extracted, therefore, a second comment that is the same as the first comment may be searched in the live streaming room, and the reply content may be associated with the first comment and the second comment to obtain the above set of association information, to perform the pinning.

On the basis of any one of the above embodiments, for the target information which has been pinned for display, repeated pinning is not supported. If the target information is triggered again by the administrator, an administrator terminal displays the control panel of the target information in response to the trigger operation instruction for the target information, and displays prompt information in response to the trigger operation instruction of the information pin control, to prompt the administrator that the target information has been pinned for display and cannot be pinned for display repeatedly.

On the basis of any one of the above embodiments, after the administrator client sends the pin instruction for the target information to the server, the server may review the target information. The review may be a machine review or a manual review, and the review is performed automatically by the server through a preset reviewing algorithm, which is not limited herein. In the review process, the administrator client may display a first display control at a target position of a live streaming room interface, the target information and a review status being displayed in the first display control, for example, "reviewing". If the review is passed, the server controls the target position of the live streaming room interface of all clients to display the first display control, the target information being displayed in the first display control, and the first display control in the administrator client no longer displays the review status; if the review is not passed, the server may display that the review is not passed in the first display control after receiving a notification that the review of the server is not passed, or directly close the first display control and display the notification that the review is not passed.

On the basis of any one of the above embodiments, the first display control of the administrator client may further include a cancel pin sub control, as shown in FIG. 9, a cancel pin sub control 3041 is configured to cancel the pinning of the target information that has been pinned for display. Specifically, the method further includes:

controlling the live streaming room interface of all clients in the live streaming room to close the first display control in response to a trigger operation instruction for the cancel pin sub control.

In this embodiment, the target information is displayed in the first display control, if the administrator determines that the target information does not need to be pinned for display, the cancel pin sub control in the first display control may be triggered, and the administrator client controls the live streaming room interface to close the first display control in response to a trigger operation instruction of canceling the pin sub control, to cancel the pining of the target information. Optionally, the administrator client may send a cancel pin instruction for the target information to the server, causing the server to control the live streaming room interface of all clients in the live streaming room to close the first display control. Optionally, after the cancel pin sub control in the first display control is triggered, a secondary confirmation pop-up window may also be displayed, and the secondary confirmation pop-up window may be configured to prompt whether to confirm a cancellation of the pinning, including an option of confirmation and an option of cancellation. The cancel pin instruction for the target information may be sent to the server after the option of confirmation is selected, and the secondary confirmation pop-up window may be closed after the option of cancellation is selected.

In some embodiments, the administrator may also perform a trigger operation on the target information in the first display control, for example, a click or long press, and then the administrator client controls the live streaming room interface to close the first display control, for example, by sending a cancel pin instruction for the target information to the server; or after the trigger operation is performed on the target information in the first display control, the secondary confirmation pop-up window may be displayed, where the secondary confirmation pop-up window may be configured to prompt whether to confirm the cancellation of the pining, including an option of confirmation and an option of cancellation.

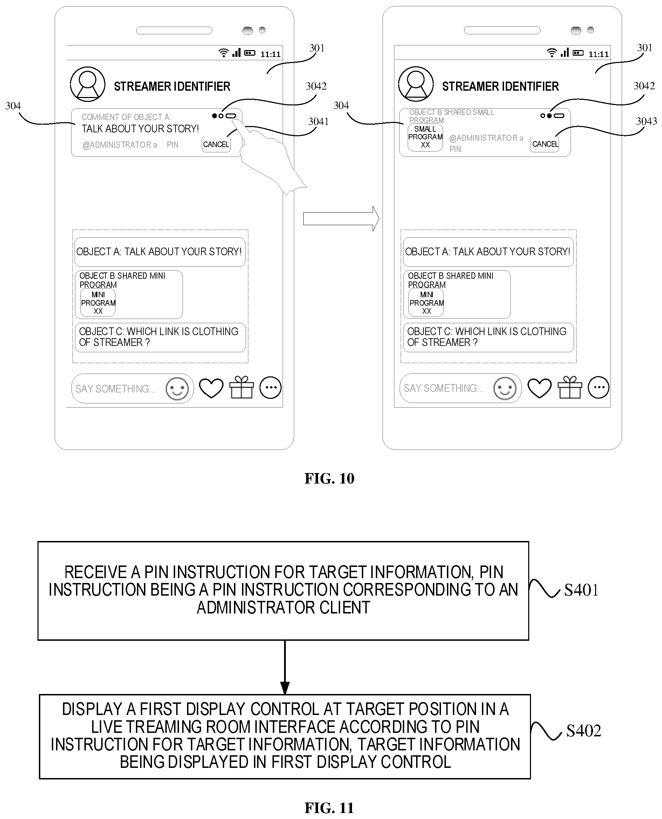

Optionally, if there are a plurality of target information, the plurality of different target information may be respectively pinned for display by a same administrator client or a different administrator (and/or an streamer) client. In order to avoid the situation that an area occupied by the first display control occupying the live streaming room interface is too large, the plurality of target information may be displayed in carousel manner in the display control, for example, any target information is switched to next target information after displaying a preset duration; the target information in the first display control may also be switched by a sliding operation; or a switch sub control may be set in the first display control, as shown in FIG. 10. If the target information needs to be actively switched in the first display control 304, the switch sub control 3042 in the first display control 304 may be triggered, and in response to a trigger operation instruction of the switch sub control 3042 in the first display control 304, the plurality of target information may be switched and displayed in the first display control 304. For example, after the switch sub control is clicked once, switching of the target information is performed once. Of course, there may be an upper limit on the number of the target information, and if the number of the target information reaches the upper limit, and if the administrator performs pinning of new target information again, prompt information of the upper limit may be displayed in the administrator client, or target information that firstly pinned for display may be removed from the first display control according to a pin order, and then the new target information is pinned for display.

In other embodiments, the plurality of target information may also be displayed in different display controls, for example, a first display control displays first target information, and a second display control displays second target information, and the like, and details are not described herein again.

Further, each piece of the target information in the first display control corresponds to a cancel pin sub control. For example, as shown in FIG. 10, if the first target information (such as a comment of a user A in the first display control 304 on the left side in FIG. 10) is displayed in the first display control 304, the first display control 304 includes a cancel pin sub control 3041, which may be configured to cancel the pinning of the first target information; if the second target information (the shared mini program of an object B in the first display control 304 on the right side in FIG. 10) is displayed in the first display control 304, the first display control 304 includes the cancel pin sub control 3043, which may be configured to cancel the pinning of the second target information, and so on. The administrator may cancel the pinning of any piece of first target information in a plurality of different target information. Specifically, taking any piece of first target information in the first display control as an example, the administrator may trigger a cancel pin sub control corresponding to the first target information. The administrator client controls, in response to a trigger operation instruction for the cancel pin sub control, a deletion of the first target information from the first display control in the live streaming room interface, to cancel the pinning of the first target information separately, and the first display control may further continue to display other target information. Optionally, the administrator client may send a cancel pin instruction to the server, so that the first target information is deleted from the first display control in the live streaming room interface of all clients in the live streaming room of the server.

In some embodiments, if there are a plurality of administrators with information pin permission in the live streaming room, each administrator with information pin permission may perform the pinning of the target information. So if any target information is displayed in the first display control, operation object information for pinning the target information may also be displayed, for example, if the target information is pinned for display by any administrator client, an administrator identifier may be displayed, and if the target information is pinned for display by an streamer client, an streamer identifier may be displayed. Optionally, the operation object information for pinning the target information is displayed in the first display control of the administrator client and the streamer client, and the operation object information for pinning the target information is not displayed in the first display control of an audience client.

In order to avoid conflicts between different administrators, each administrator can only cancel the pining of the target information pinned for display by themselves, but cannot cancel the pining of the target information pinned for display by other administrators. Correspondingly, for the present administrator client, if any target information in the first display control is not pinned for display by the administrator client, the cancel pin sub control corresponding to the target information is set to be unavailable in the first display control, that is, the cancel pin sub control corresponding to the target information cannot be triggered, and the cancel pin sub control may not be displayed in the first display control or may be set to an unavailable state (for example, set gray), so that the cancellation of the pining of the target information pinned by other administrator clients cannot be performed; if any target information in the first display control is pinned for display by the administrator client, the cancel pin sub control corresponding to the target information is enabled in the first display control, for example, the cancel pin sub control is switched from a non-display state to a display state, or the cancel pin sub control is set to the available state (active state), that is, the cancel pin sub control corresponding to the target information may be triggered, and cancellation of the pining of the target information pinned for display by the present administrator client is enabled.

Referring to FIG. 11, FIG. 11 is a schematic flowchart of an method for displaying information in a live streaming room provided by an embodiment of the present disclosure. The method of this embodiment may be applied to an streamer client, and the method for displaying information in the live streaming room includes:
S401, receiving a pin instruction for target information, the pin instruction is a pin instruction corresponding to the administrator client, that is, a pin instruction of the administrator client for the target information;
S402: displaying a first display control at a target position in a live streaming room interface according to the pin instruction for the target information, the target information being displayed in the first display control.

In this embodiment, the administrator client triggers the pin instruction of the target information, and the streamer client may receive the pin instruction of the target information. For example, the administrator client sends the pin instruction of the target information to the server, and the server may send the pin instruction for the target information to the streamer client, so that the streamer client may display the first display control at the target position in the live streaming room interface according to the pin instruction for the target information. The target information is displayed in the first display control. Then the streamer client pins the target information, and may also display the target information through the first display control in the live streaming stream pushed by the streamer client to the server, causing the live streaming room interface of all clients in the live streaming room to display the target information.

Optionally, the streamer client may also perform the pining of any target information in the live streaming room, and the process is the same as that of the above administrator client, and details are not described herein again.

On the basis of any one of the above embodiments, the streamer client may cancel the pining of the target information pinned by any administrator client, specifically, the first display control of the streamer client further includes a cancel pin sub control, the streamer may trigger the cancel pin sub control, and further, the streamer client controls the live streaming room interface to close the first display control in response to the trigger operation instruction for the cancel pin sub control. Optionally, the streamer client may send a cancel pin instruction to the server, causing the server to control the live streaming room interface of all clients in the live streaming room to close the first display control, to implement cancellation of the pining of the target information.

Optionally, if there are a plurality of target information, including the streamer client and/or the at least one administrator client respectively pinning the plurality of different target information, the plurality of target information may be displayed in carousel in the first display control, for example, after any target information is displayed for a preset duration, the next target information is switched; and/or, the switch sub control may be set in the first display control, and if the target information needs to be actively switched in the first display control, the switch sub control in the first display control may be triggered, and the streamer client may switch and display the plurality of target information in the first display control in response to a trigger operation instruction of the switch sub control in the first display control.

Optionally, if any piece of target information is displayed in the first display control, the operation object information for pinning the target information may also be displayed, for example, if the target information is a pinning of any administrator client, an administrator identifier may be displayed, and if the target information is a pinning of the streamer client, an streamer identifier may be displayed.

Optionally, if there are a plurality of target information which have been pinned for display, the streamer client may cancel the pining of any target information. Specifically, each piece of target information in the first display control corresponds to a cancel pin sub control, for example, when the first target information is displayed in the first display control, the first display control includes a cancel pin sub control, which may be configured to cancel the pining of the first target information; when the second target information is displayed in the first display control, the second display control includes a cancel pin sub control, which may be configured to cancel the pining of the second target information, and so on. Taking the streamer canceling the pinning of any first target information in the first display control as an example, the streamer may trigger a cancel pin sub control corresponding to the first target information, and the streamer client controls a deletion of the first target information from the first display control in the live streaming room interface in response to a trigger operation instruction for the cancel pin sub control. Optionally, the streamer client may send a cancel pin instruction to the server, causing the server to control the deletion of the first target information from the first display control in the live streaming room interface of all clients in the live streaming room, to cancel the pining of the first target information separately, and the first display control may further continue to display other target information.

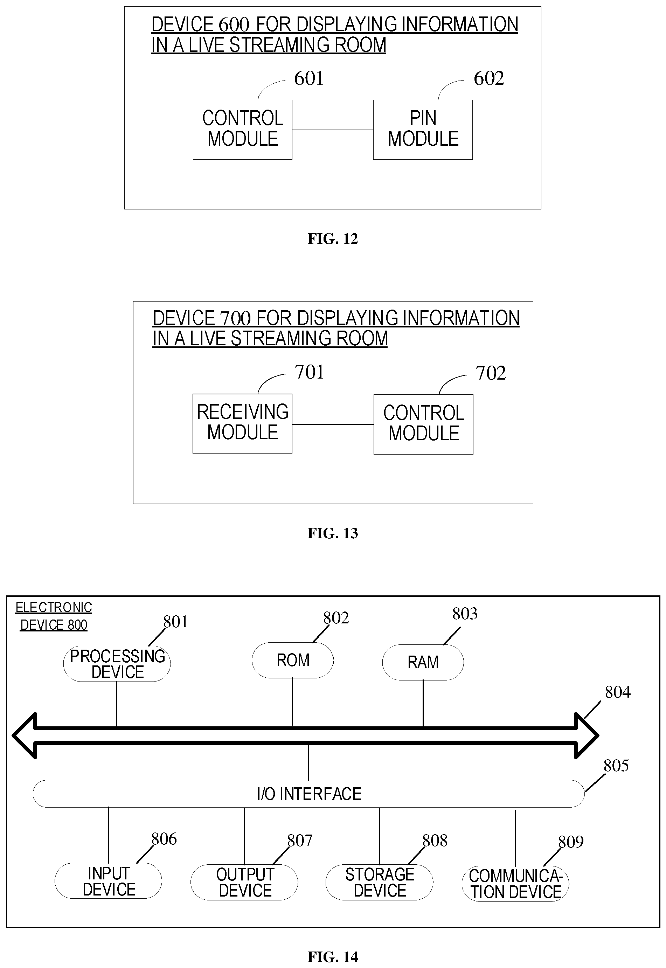

Corresponding to the method for displaying information in the live streaming room on the client side of the administrator of the above embodiment, FIG. 12 is a structural block diagram of a device for displaying information in a live streaming room provided by an embodiment of the present disclosure. For ease of illustration, only portions related to embodiments of the present disclosure are shown. Referring to FIG. 12, the device 600 for displaying information in the live streaming room includes a control module 601 and a pin module 602.

The control module 601 is configured to display a control panel of target information in response to a trigger operation instruction for any target information in the live streaming room, wherein the control panel includes an information pin control;
The pin module 602 is configured to control a target position of a live streaming room interface to display a first display control in response to a trigger operation instruction for the information pin control, the target information being displayed in the first display control.

In some embodiments, when controlling the target position of the live streaming room interface to display the first display control, the target information being displayed in the first display control, the pin module 602 is configured to:
send a pin instruction for the target information to a server, causing the server to control a target position of the live streaming room interface of all clients in the live streaming room to display the first display control, the target information being displayed in the first display control.

In some embodiments, if the target information is a comment, a comment display area corresponding to the comment includes an object identifier area and a comment content area, and when displaying the control panel of the target information in response to the trigger operation instruction for any target information in the live streaming room, the control module 601 is configured to:
display a control panel corresponding to the comment in response to a trigger operation instruction for the comment content area.

In some embodiments, when displaying the control panel of the target information in response to the trigger operation instruction for any target information in the live streaming room, the control module 601 is configured to:
display a control panel corresponding to a first comment in response to a trigger operation instruction for the first comment, the control panel including a reply control and an information pin control;
display an input box in response to a trigger operation instruction for the reply control, receiving reply content input in the input box, associating the reply content with the first comment to obtain a set of association information, and determining the association information as the target information.

In some embodiments, when associating the reply content with the first comment to obtain the set of association information, the control module 601 is configured to:
determine a second user question in the live streaming room that is the same as the first user question, and associate the reply content with the first user question and the second user question to obtain a set of association information.

In some embodiments, the first display control further includes a cancel pin sub control, and the method further includes:
the pin module 602 is further configured to control the live streaming room interface to close the first display control in response to a trigger operation instruction for the cancel pin sub control.

In some embodiments, when controlling the live streaming room interface to close the first display control, the pin module 602 is configured to:
send a cancel pin instruction to the server, causing the server to control the live streaming room interface of all clients in the live streaming room to close the first display control.

In some embodiments, if there are a plurality of target information, the control module 601 is further configured to:
display the plurality of target information in carousel in the first display control; and/or
switch and display the plurality of target information in the first display control in response to a sliding operation instruction in the first display control or in response to a trigger operation instruction for a switching sub control in the first display control.

In some embodiments, each piece of the target information in the first display control corresponds to a cancel pin sub control, and the pin module 602 is further configured to:
for a cancel pin sub control corresponding to any first target information in the first display control, control a deletion of the first target information from the first display control in the live streaming room interface in response to a trigger operation instruction for the cancel pin sub control.

In some embodiments, when controlling the deletion of the first target information from the first display control in the live streaming room interface, the pin module 602 is configured to:
send a cancel pin instruction to the server, causing the server to control the deletion of the first target information from the first display control in the live streaming room interface of all clients in the live streaming room.

In some embodiments, operation object information for pinning of the target information is further displayed in the first display control; and the control module 601 is further configured to:
if the target information does not belong to information pinned by the administrator client, setting the cancel pin sub control corresponding to the target information as unavailable;
if the target information belongs to the information pinned by the administrator client, enabling the cancel pin control corresponding to the target information.

The device for displaying information in the live streaming room provided in this embodiment may be configured to execute the technical solution of the above method embodiment on the client side of the administrator, and implementation principles and technical effects thereof are similar, and details are not described herein again in this embodiment.

Corresponding to the method for displaying information in the live streaming room on the streamer client side in the above embodiment, FIG. 13 is a structural block diagram of a device for displaying information in a live streaming room provided by an embodiment of the present disclosure. For ease of illustration, only portions related to embodiments of the present disclosure are shown. Referring to FIG. 13, the device 700 for displaying information in the live streaming room includes a receiving module 701 and a control module 702.

The receiving module 701 is configured to receive a pin instruction for target information, the pin instruction being a pin instruction corresponding to an administrator client;
The control module 702 is configured to display a first display control at a target position in a live streaming room interface according to the pin instruction for the target information, the target information being displayed in the first display control.

In some embodiments, the first display control further includes a cancel pin sub control, and the device further includes a sending control configured to:
control the live streaming room interface to close the first display control in response to a trigger operation instruction for the cancel pin sub control.

In some embodiments, when controlling the live streaming room interface to close the first display control, the control module 702 is configured to:
send a cancel pin instruction to the server, causing the server to control live streaming room interface of all clients in the live streaming room to close the first display control.

In some embodiments, if there are a plurality of target information, the control module 702 is further configured to:
display the plurality of target information in carousel in the first display control; and/or
switch and display the plurality of target information in the first display control in response to a sliding operation instruction in the first display control or in response to a trigger operation instruction for a switching sub control in the first display control.

In some embodiments, each piece of target information in the first display control corresponds to a cancel pin sub control, and the control module 702 is further configured to:
for a cancel pin sub control corresponding to any first target information in the first display control, controlling a deletion of the first target information from the first display control in the live streaming room interface in response to a trigger operation instruction for the cancel pin sub control.

In some embodiments, when the control module 702 controls the deletion of the first target information from the first display control in the live streaming room interface, the control module 702 is configured to:
send a cancel pin instruction to the server, causing the server to control the deletion of the first target information from the first display control in the live streaming room interface of all clients in the live streaming room.

The device for displaying information in the live streaming room provided in this embodiment may be configured to execute the technical solution of the method embodiment on the streamer client side, and the implementation principle and technical effect thereof are similar, and details are not described herein again.

FIG. 14 shows a schematic structural diagram of an electronic device 800 suitable for implementing embodiments of the present disclosure, and the electronic device 800 may be an administrator client or an streamer client in the above embodiments. In some embodiments, the electronic device may include, but is not limited to, a mobile terminal such as a mobile phone, a notebook computer, a digital streaming receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 14 is merely an example, and should not impose any limitation on the functions and scope of use of the embodiments of the present disclosure.

As shown in FIG. 14, the electronic device 800 may include a processing device (for example, a central processing module, a graphics processor, etc. ) 801, which may perform various appropriate actions and processing according to a program stored in a read only memory (ROM) 802 or a program loaded into a random access memory (RAM) 803 from a storage device 808. In the RAM 803, various programs and data required by the operation of the electronic device 800 are also stored. The processing device 801, the ROM 802, and the RAM 803 are connected to each other through a bus 804. Input/output (I/O) interface 805 is also connected to bus 804.

Generally, the following devices may be connected to the I/O interface 805: an input device 806 including, for example, a touch screen, a touch pad, a keyboard, a mouse, a camera, a microphone, an accelerometer, a gyroscope, etc. ; an output device 807 including, for example, a liquid crystal display (LCD), a speaker, a vibrator, etc. ; a storage device 808 including, for example, a magnetic tape, a hard disk, etc. ; and a communication device 809. The communication device 809 may allow the electronic device 800 to communicate wirelessly or wired with other devices to exchange data. While FIG. 14 shows an electronic device 800 having various devices, it should be understood that it is not required to implement or have all illustrated devices. More or fewer devices may alternatively be implemented or provided.

In particular, according to embodiments of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network by the communication device 809, or installed from the storage device 808, or from the ROM 802. When the computer program is executed by the processing apparatus 801, the above functions defined in the method of embodiments of the present disclosure are performed.

It should be noted that the computer readable medium described above may be a computer readable signal medium, a computer readable storage medium, or any combination of the above two. The computer readable storage medium may be, for example, but not limited to, an electrical, magnetic, optical, electromagnetic, infrared, or semiconductor system, apparatus, or device, or any combination thereof. More specific examples of computer readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the above. In the present disclosure, a computer readable storage medium may be any tangible medium containing or storing a program that may be used by or in connection with an instruction execution system, apparatus, or device. In the present disclosure, a computer readable signal medium may include a data signal propagated in baseband or as part of a carrier, the computer readable program code being carried. Such propagated data signals may take a variety of forms including, but not limited to, electromagnetic signals, optical signals, or any suitable combination of the above. The computer readable signal medium may also be any computer readable medium other than a computer readable storage medium that may send, propagate, or transmit a program for use by or in connection with an instruction execution system, apparatus, or device. The program code embodied on the computer readable medium may be transmitted with any suitable medium, including, but not limited to: wires, optical cables, RF (radio frequency), and the like, or any suitable combination of the above.

The computer readable medium described above may be included in the electronic device; or may be separately present without being assembled into the electronic device.

The computer readable medium carries one or more programs, and when the one or more programs are executed by the electronic device, the electronic device is enabled to perform the method shown in the above embodiments.

Computer program code for performing the operations of the present disclosure may be written in one or more programming languages, including object oriented programming languages, such as Java, Smalltalk, C++, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer by any kind of network, including a local area network (LAN) or a wide area network (WAN), or may be connected to an external computer (for example, using an Internet service provider for Internet connection).

The flowcharts and block diagrams in the drawings illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the drawings. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The modules involved in the embodiments of the present disclosure may be implemented in software, or may be implemented in hardware. For example, the first obtaining module may be further described as "obtaining at least two modules of Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the above. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the above.

According to a first aspect, a method for displaying information in a live streaming room is provided according to one or more embodiments of the present disclosure, applied to an administrator client, and the method includes:
displaying a control panel of target information in response to a trigger operation instruction for any target information in the live streaming room, wherein the control panel includes an information pin control;
controlling a target position of the live streaming room interface to display a first display control in response to a trigger operation instruction for the information pin control, the target information being displayed in the first display control.

According to one or more embodiments of the present disclosure, controlling the target position of the live streaming room interface to display the first display control includes:
sending a pin instruction for the target information to a server, causing the server to control a target position of the live streaming room interface of all clients in the live streaming room, the target information being displayed in the first display control.

According to one or more embodiments of the present disclosure, if the target information is a comment, the comment display area corresponding to the comment includes an object identifier area and a comment content area, and displaying the control panel of the target information in response to a trigger operation instruction for any target information in the live streaming room includes:
displaying a control panel corresponding to the comment in response to a trigger operation instruction for the comment content area.

According to one or more embodiments of the present disclosure, displaying the control panel of the target information in response to the trigger operation instruction for any target information in the live streaming room includes:
displaying a control panel corresponding to the first comment in response to a trigger operation instruction for the first comment, the control panel including a reply control and an information pin control;
displaying an input box in response to a trigger operation instruction for the reply control, receiving reply content input in the input box, associating the reply content with the first comment to obtain a set of association information, and determining the association information as the target information.

According to one or more embodiments of the present disclosure, associating the reply content to obtain the set of association information includes:
determining a second comment in the live streaming room that is the same as the first comment, and associating the reply content with the first comment and the second comment to obtain a set of association information.

According to one or more embodiments of the present disclosure, the first display control further includes a cancel pin sub control, and the method further includes:
controlling the live streaming room interface to close the first display control in response to a trigger operation instruction for the cancel pin sub control.

According to one or more embodiments of the present disclosure, if there are a plurality of target information, the method further includes:
displaying the plurality of target information in carousel in the first display control; and/or
switching and displaying the plurality of target information in the first display control in response to a sliding operation instruction in the first display control or in response to a trigger operation instruction for a switching sub control in the first display control.

According to one or more embodiments of the present disclosure, each piece of target information in the first display control corresponds to a cancel pin sub control, and the method further includes:
for a cancel pin sub control corresponding to any first target information in the first display control, controlling a deletion of the first target information from the first display control in the live streaming room interface in response to a trigger operation instruction for the cancel pin sub control.

According to one or more embodiments of the present disclosure, the controlling deletion of the first target information from the first display control in the live streaming room interface includes:
sending a cancel pin instruction to the server, causing the server to control the deletion of the first target information from the first display control in the live streaming room interface of all clients in the live streaming room.

According to one or more embodiments of the present disclosure, operation object information for pinning the target information is further displayed in the first display control, and the method further includes:
if the target information does not belong to information pinned by the administrator client, setting the cancel pin sub control corresponding to the target information as unavailable;
if the target information belongs to the information pinned by the administrator client, enabling the cancel pin control corresponding to the target information.

According to a second aspect, a method for displaying information in a live streaming room is provided according to one or more embodiments of the present disclosure, applied to an streamer client, and the method includes:
receiving a pin instruction for target information, the pin instruction being a pin instruction corresponding to an administrator client;
displaying a first display control at a target position in a live streaming room interface according to the pin instruction for the target information, the target information being displayed in the first display control.

According to one or more embodiments of the present disclosure, the first display control further includes a cancel pin sub control, and the method further includes:
controlling the live streaming room interface to close the first display control in response to a trigger operation instruction for the cancel pin sub control.

According to one or more embodiments of the present disclosure, the controlling the live streaming room interface to close the first display control includes:
Sending a cancel pin instruction to the server, causing the server to control the live streaming room interface of all clients in the live streaming room to close the first display control.

According to one or more embodiments of the present disclosure, if there are a plurality of target information, the method further includes:
displaying the plurality of target information in carousel in the first display control; and/or
switching and displaying the plurality of target information in the first display control in response to a sliding operation instruction in the first display control or in response to a trigger operation instruction for a switching sub control in the first display control.

According to one or more embodiments of the present disclosure, each piece of the target information in the first display control corresponds to a cancel pin sub control, and the method further includes:
for a cancel pin sub control corresponding to any first target information in the first display control, controlling a deletion of the first target information from the first display control in the live streaming room interface in response to a trigger operation instruction for the cancel pin sub control.

According to one or more embodiments of the present disclosure, controlling the deletion of the first target information from the first display control in the live streaming room interface includes:
sending a cancel pin instruction to the server, causing the server to control the deletion of the first target information from the first display control in the live streaming room interface of all clients in the live streaming room.

According to a third aspect, a device for displaying information in a live streaming room is provided according to one or more embodiments of the present disclosure, including:
a control module, configured to display a control panel of target information in response to a trigger operation instruction for any target information in the live streaming room, wherein the control panel includes an information pin control;
a pin module, configured to control a target position of a live streaming room interface of all clients in the live streaming room to display a first display control in response to a trigger operation instruction for the information pin control, the target information being displayed in the first display control.

According to one or more embodiments of the present disclosure, when controlling the target position of the live streaming room interface to display the first display control, the pin module is configured to:
send a pin instruction for the target information to a server, causing the server to control a target position of the live streaming room interface of all clients in the live streaming room to display the first display control, the target information being displayed in the first display control.

According to one or more embodiments of the present disclosure, if the target information is a comment, the comment display area corresponding to the comment includes an object identifier area and a comment content area, and when displaying the control panel of the target information in response to a trigger operation instruction for any target information in the live streaming room, the control module is configured to:
display a control panel corresponding to the comment in response to a trigger operation instruction for the comment content area.

According to one or more embodiments of the present disclosure, when displaying the control panel of the target information in response to the trigger operation instruction for any target information in the live streaming room, the control module is configured to:
display a control panel corresponding to a first comment in response to a trigger operation instruction for the first comment, the control panel including a reply control and an information pin control;
display an input box in response to a trigger operation instruction for the reply control, receiving reply content input in the input box, associating the reply content with the first comment to obtain a set of association information, and determining the association information as the target information.

According to one or more embodiments of the present disclosure, when the control module associates the reply content with the first comment to obtain a set of association information, the control module is configured to:
determine a second comment in the live streaming room that is the same as the first comment, and associating the reply content with the first comment and the second comment to obtain a set of association information.

According to one or more embodiments of the present disclosure, the first display control further includes a cancel pin sub control, and the method further includes:
the pin module is further configured to control the live streaming room interface to close the first display control in response to a trigger operation instruction for the cancel pin sub control.

According to one or more embodiments of the present disclosure, when controlling the live streaming room interface to close the first display control, the pin module is configured to:
send a cancel pin instruction to the server, causing the server to control the live streaming room interface of all clients in the live streaming room to close the first display control.

According to one or more embodiments of the present disclosure, if there are a plurality of target information, the control module is further configured to:
the plurality of target information in carousel in the first display control; and/or
switch and display the plurality of target information in the first display control in response to a sliding operation instruction in the first display control or in response to a trigger operation instruction for a switching sub control in the first display control.

According to one or more embodiments of the present disclosure, each piece of target information in the first display control corresponds to a cancel pin control, and the pin module is further configured to:
for a cancel pin sub control corresponding to any first target information in the first display control, controlling a deletion of the first target information from the first display control in the live streaming room interface in response to a trigger operation instruction for the cancel pin sub control.

According to one or more embodiments of the present disclosure, when controlling the deletion of the first target information from the first display control in the live streaming room interface, the pin module is configured to:
send a cancel pin instruction to the server, causing the server to control the deletion of the first target information from the first display control in the live streaming room interface of all clients in the live streaming room.

According to one or more embodiments of the present disclosure, operation object information for pinning the target information is further displayed in the first display control, and the control module is further configured to:
if the target information does not belong to information pinned by the administrator client, set the cancel pin sub control corresponding to the target information as unavailable;
if the target information belongs to the information pinned by the administrator client, enable the cancel pin control corresponding to the target information.

According to a fourth aspect, a device for displaying information in a live streaming room is provided according to one or more embodiments of the present disclosure, including:
a receiving module, configured to receive a pin instruction for target information, the pin instruction being a pin instruction corresponding to an administrator client;
a control module, configured to display a first display control at a target position in a live streaming room interface according to the pin instruction for the target information, the target information being displayed in the first display control.

According to one or more embodiments of the present disclosure, the first display control further includes a cancel pin sub control, and the device further includes a sending control configured to:
control the live streaming room interface to close the first display control in response to a trigger operation instruction for the cancel pin sub control.

According to one or more embodiments of the present disclosure, when controlling the live streaming room interface to close the first display control, the control module is configured to:
send a cancel pin instruction to the server, causing the server to control the live streaming room interface of all clients in the live streaming room to close the first display control.

According to one or more embodiments of the present disclosure, if there are a plurality of target information, the control module is further configured to:
display the plurality of target information in carousel in the first display control; and/or
switching and displaying the plurality of target information in the first display control in response to a sliding operation instruction in the first display control or in response to a trigger operation instruction for a switching sub control in the first display control.

According to one or more embodiments of the present disclosure, each piece of the target information in the first display control corresponds to a cancel pin sub control, and the control module is further configured to:
for a cancel pin sub control corresponding to any first target information in the first display control, control a deletion of the first target information from the first display control in the live streaming room interface in response to a trigger operation instruction for the cancel pin sub control.

According to one or more embodiments of the present disclosure, when the control module controls the deletion of the first target information from the first display control in the live streaming room interface, the control module is configured to:
send a cancel pin instruction to the server, causing the server to control the deletion of the first target information from the first display control in the live streaming room interface of all clients in the live streaming room.

According to a fifth aspect, an electronic device is provided according to one or more embodiments of the present disclosure, including: at least one processor and a memory;
the memory storing computer executable instructions;
the at least one processor executing the computer executable instructions stored in the memory, causing the at least one processor to perform the method for displaying information in the live streaming room according to the first aspect and the possible designs of the first aspect, or the method for displaying information in the live streaming room according to the second aspect and the possible designs of the second aspect.

According to a sixth aspect, a computer readable storage medium is provided according to one or more embodiments of the present disclosure, the computer readable storage medium storing computer executable instructions, when executed by the processor, cause the processor to perform the method for displaying information in the live streaming room according to the first aspect and the possible designs of the first aspect, or the method for displaying information in the live streaming room according to the second aspect and the possible designs of the second aspect.

According to a seventh aspect, a computer program product is provided, including a computer executable instruction, and when the processor executes the computer executable instruction, the method for displaying information in the live streaming room according to the first aspect and the possible designs of the first aspect, or the method for displaying information in the live streaming room according to the second aspect and the possible designs of the second aspect is implemented.

The above description is merely an illustration of preferred embodiments of the present disclosure and principles of applied technology. It should be understood by those skilled in the art that the disclosure in the present disclosure is not limited to the technical solutions of specific combination of the above technical features, and should also cover other technical solutions formed by any combination of the above technical features or their equivalent features without departing from the above disclosed concept. For example, a technical solution formed by mutually replacing technical features disclosed in the above features and the present disclosure (but not limited).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable sub-combination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for displaying information in a live streaming room, applied to an administrator client, and the method comprising:
displaying a control panel of target information in response to a trigger operation instruction for any target information in the live streaming room, wherein the control panel comprises an information pin control;
controlling a target position of a live streaming room interface to display a first display control in response to a trigger operation instruction for the information pin control, the target information being displayed in the first display control.

2. The method of claim 1, wherein controlling the target position of the live streaming room interface to display the first display control comprises:
sending a pin instruction for the target information to a server, causing the server to control a target position of the live streaming room interface of all clients in the live streaming room to display the first display control, the target information being displayed in the first display control.

3. The method of claim 1, wherein if the target information is a comment, a comment display area corresponding to the comment comprises an object identifier area and a comment content area, and displaying the control panel of the target information in response to the trigger operation instruction for any target information in the live streaming room comprises:
displaying a control panel corresponding to the comment in response to a trigger operation instruction for the comment content area.

4. The method of claim 1 or 3, wherein displaying the control panel of the target information in response to the trigger operation instruction for any target information in the live streaming room comprises:
displaying a control panel corresponding to a first comment in response to a trigger operation instruction for the first comment, the control panel comprising a reply control and an information pin control;
displaying an input box in response to a trigger operation instruction for the reply control, receiving reply content input in the input box, associating the reply content with the first comment to obtain a set of association information, and determining the association information as the target information.

5. The method of claim 4, wherein associating the reply content with the first comment to obtain the set of association information comprises:
determining a second comment in the live streaming room that is the same as the first comment, and associating the reply content with the first comment and the second comment to obtain a set of association information.

6. The method of claim 1, wherein the first display control further comprises a cancel pin sub-control, and the method further comprises:
controlling the live streaming room interface to close the first display control in response to a trigger operation instruction for the cancel pin sub-control.

7. The method of claim 6, wherein controlling the live streaming room interface to close the first display control comprises:
sending a cancel pin instruction to the server, causing the server to control the live streaming room interface of all clients in the live streaming room to close the first display control.

8. The method of claim 1, wherein if there are a plurality of target information, the method further comprises:
displaying the plurality of target information in carousel in the first display control; and/or
switching and displaying the plurality of target information in the first display control in response to a sliding operation instruction in the first display control or in response to a trigger operation instruction for a switching sub-control in the first display control.

9. The method of claim 8, wherein each piece of the target information in the first display control corresponds to a cancel pin sub-control, and the method further comprises:
for a cancel pin sub-control corresponding to any first target information in the first display control, controlling a deletion of the first target information from the first display control in the live streaming room interface in response to a trigger operation instruction for the cancel pin sub-control.

10. The method of claim 9, wherein controlling the deletion of the first target information from the first display control in the live streaming room interface comprises:
sending a cancel pin instruction to the server, causing the server to control the deletion of the first target information from the first display control in the live streaming room interface of all clients in the live streaming room.

11. The method of claim 6 or 9, wherein operation object information for pinning the target information is further displayed in the first display control, and the method further comprises:
if the target information does not belong to information pinned by the administrator client, setting the cancel pin sub-control corresponding to the target information as unavailable; or
if the target information belongs to the information pinned by the administrator client, enabling the cancel pin control corresponding to the target information.

12. A method for displaying information in a live streaming room, applied to a streamer client, and the method comprising:
receiving a pin instruction for target information, the pin instruction being a pin instruction corresponding to an administrator client;
displaying a first display control at a target position in a live streaming room interface according to the pin instruction for the target information, the target information being displayed in the first display control.

13. The method of claim 12, wherein the first display control further comprises a cancel pin sub-control, and the method further comprises:
controlling the live streaming room interface to close the first display control in response to a trigger operation instruction for the cancel pin sub-control.

14. The method of claim 12, wherein if there are a plurality of target information, the method further comprises:
displaying the plurality of target information in the first display control in carousel; and/or
switching and displaying the plurality of target information in the first display control in response to a sliding operation instruction in the first display control or in response to a trigger operation instruction for a switching sub-control in the first display control.

15. The method of claim 14, wherein each piece of the target information in the first display control corresponds to a cancel pin sub-control, and the method further comprises:
for a cancel pin sub-control corresponding to any first target information in the first display control, controlling a deletion of the first target information from the first display control in the live streaming room interface in response to a trigger operation instruction for the cancel pin sub-control.

16. A device for displaying information in a live streaming room, comprising:
a control module, configured to display a control panel of target information in response to a trigger operation instruction for any target information in the live streaming room, wherein the control panel comprises an information pin control;
a pin module, configured to control a target position of a live streaming room interface to display a first display control in response to a trigger operation instruction for the information pin control, the target information being displayed in the first display control.

17. A device for displaying information in a live streaming room, comprising:
a receiving module, configured to receive a pin instruction for target information, the pin instruction being a pin instruction corresponding to an administrator client;
a control module, configured to display a first display control at a target position in a live streaming room interface according to the pin instruction for the target information, the target information being displayed in the first display control.

18. An electronic device, comprising: at least one processor and a memory;
the memory storing computer executable instructions; and
the at least one processor executing the computer executable instructions stored in the memory, causing the at least one processor to perform the method according to any of claims 1 to 15.

19. A computer readable storage medium, the computer readable storage medium storing computer executable instructions, when executed by the processor, cause the processor to perform the method according to any of claims 1 to 15.

20. A computer program product, comprising computer executable instructions, when executed by the processor, cause the processor to perform the method according to any of claims 1 of 15.
